# EUROPÄISCHE PATENTSCHRIFT

(11) **EP 3 191 828 B1**
(45) Veröffentlichungstag und Bekanntmachung des Hinweises auf die Patenterteilung: **11.11.2020**
(21) Anmeldenummer: 15756924.5
(22) Anmeldetag: 01.09.2015
(51) Int. Cl.: G01N 27/417, G01N 27/419

(54) **VERFAHREN UND VORRICHTUNG ZUM NACHWEIS MINDESTENS EINES ANTEILS EINER MESSGASKOMPONENTE MIT GEBUNDENEM SAUERSTOFF IN EINEM GASGEMISCH**
METHOD AND DEVICE FOR DETECTING AT LEAST A PORTION OF THE MEASUREMENT GAS COMPONENT HAVING BOUND OXYGEN IN A GAS MIXTURE
PROCÉDÉ ET DISPOSITIF DE DÉTECTION D'AU MOINS UNE FRACTION D'UN COMPOSANT GAZEUX DE MESURE, LIÉ A DE L'OXYGÈNE, DANS UN MÉLANGE GAZEUX

(30) Priorität: 11.09.2014 DE 102014218223; 09.06.2015 DE 102015210473
(43) Veröffentlichungstag der Anmeldung: 19.07.2017
(73) Patentinhaber: Robert Bosch GmbH, 70442 Stuttgart (DE)
(72) Erfinder: MAKOWSKI, Jan Dominique, 70567 Stuttgart (DE); HEIN, Reinhard, 74343 Sachsenheim (DE); DREYER, Andreas, 71254 Ditzingen (DE); DAECKE, Dirk, 70619 Stuttgart (DE); OECHTERING, Peter, 76229 Karlsruhe (DE); WALDORF, Moritz, 70195 Stuttgart (DE)
(86) Internationale Anmeldenummer: PCT/EP2015/069939
(87) Internationale Veröffentlichungsnummer: WO 2016/037900

(56) Entgegenhaltungen:
- EP-A1- 0 769 693
- WO-A2-2008/154366
- DE-A1-102009 001 622
- DE-A1-102009 047 359
- DE-A1-102010 029 027
- US-A1- 2005 288 847

## Beschreibung

### Stand der Technik

Die vorliegenden Erfindung betrifft ein Verfahren und eine Vorrichtung zum Nachweis mindestens eines Anteils einer Messgaskomponente mit gebundenem Sauerstoff in einem Gasgemisch, insbesondere in einem Abgas einer Verbrennungskraftmaschine, in einem Messgasraum durch Erfassen eines Anteils an Sauerstoff, der durch eine Reduktion der Messgaskomponente mit dem gebundenem Sauerstoff erzeugt wird, bei Anwesenheit von molekularem Sauerstoff. Die vorliegenden Erfindung betrifft weiterhin ein Computerprogramm, welches dazu eingerichtet ist, um die Schritte des genannten Verfahrens durchzuführen, ein elektronisches Speichermedium, auf welchem ein derartiges Computerprogramm gespeichert ist, und ein elektronisches Steuergerät, welches insbesondere ein derartiges elektronisches Speichermedium umfasst.

Aus dem Stand der Technik sind Verfahren und Vorrichtungen zum Nachweis mindestens eines Anteils eines Gases in einem Gasgemisch bekannt. Die Erfindung wird im Folgenden, ohne Beschränkung weiterer möglicher Ausgestaltungen, im Wesentlichen unter Bezugnahme auf Vorrichtungen beschrieben, welche zur quantitativen und/oder qualitativen Erfassung mindestens eines Anteils, insbesondere eines Partialdrucks und/oder eines Volumenanteils und/oder eines Massenanteils, eines Gases an einem Gasgemisch dienen. Beispielsweise kann es sich bei dem Gas um ein Abgas einer Verbrennungskraftmaschine handeln, insbesondere im Kraftfahrzeugbereich. Als Sensor zur Erfassung des Gasanteils handelt es sich insbesondere um eine Lambdasonde. Lambdasonden sind beispielsweise in Konrad Reif, Hrsg., Sensoren im Kraftfahrzeug, 2. Auflage, 2012, Seiten 160-165 beschrieben. Lambdasonden, insbesondere universelle Lambdasonden, stellen zwei Stoffströme, insbesondere Sauerstoffströme, zwischen zwei Räumen, bei welchen es sich um einen Gasraum außerhalb der Vorrichtung oder um einen Hohlraum in der Vorrichtung handeln kann, in ein Gleichgewicht. Einer der Stoffströme wird hierbei durch Konzentrationsunterschiede über eine Diffusionsbarriere getrieben. Ein weiterer Stoffstrom wird über einen Festkörperelektrolyten und zwei Elektroden, insbesondere zwei Pumpelektroden, gesteuert durch einen angelegten Pumpstrom, getrieben. Der Pumpstrom wird dabei vorzugsweise so eingeregelt, dass sich in dem Hohlraum eine konstante und sehr geringe Sauerstoffkonzentration einstellt. Ein Konzentrationsprofil über die Diffusionsbarriere ist durch einen konstanten Regelpunkt in dem Hohlraum, insbesondere eine konstante Sollspannung resultierend in einer Sauerstoffkonzentration, und durch eine abgasseitige Sauerstoffkonzentration eindeutig bestimmt. Ein Zustrom von Sauerstoffmolekülen aus dem Messgasraum zum Hohlraum stellt sich entsprechend diesem eindeutigen Konzentrationsprofil ein und entspricht dem eingeregelten Pumpstrom. Daher kann der Pumpstrom als Messwert für die Sauerstoffkonzentration im Messgasraum, insbesondere für die abgasseitig anliegende Sauerstoffkonzentration dienen.

Weiterhin sind Verfahren und Vorrichtungen zum Nachweis mindestens eines Anteils der Messgaskomponente mit gebundenem Sauerstoff in einem Gasgemisch, insbesondere in einem Abgas einer Verbrennungskraftmaschine, durch Erfassen eines Anteils an Sauerstoff, der durch eine Reduktion der Messgaskomponente mit dem gebundenem Sauerstoff erzeugt wird, bei Anwesenheit von molekularem Sauerstoff bekannt. Die EP 0769693 A1 offenbart ein Verfahren und eine Vorrichtung zum Nachweis mindestens eines Anteils der Messgaskomponente mit gebundenem Sauerstoff, insbesondere ein Stickoxid NOₓ, in einem Gasgemisch durch Erfassen eines Anteils an Sauerstoff, der durch eine Reduktion der Messgaskomponente mit dem gebundenem Sauerstoff erzeugt wird, bei Anwesenheit von molekularem Sauerstoff, insbesondere durch die Reduktion des Stickoxids NOₓ mittels eines für diesen Zweck geeigneten Katalysators. Die darin beschriebene Vorrichtung umfasst eine erste Pumpzelle, die an einem ersten Hohlraum anliegt, welcher mit dem Messgasraum in Verbindung steht, wobei die erste Pumpzelle dazu dient, Sauerstoff aus dem ersten Hohlraum zu transportieren, wodurch sich ein geringerer Sauerstoffpartialdruck in dem ersten Hohlraum einstellt. Die Vorrichtung umfasst weiterhin eine Referenzzelle, die an einem Referenzgasraum anliegt und welche dazu dient, um Sauerstoff aus dem zweiten Hohlraum derart zu transportieren, dass ein Sauerstoffpartialdruck in einer Atmosphäre in dem zweiten Hohlraum derart reguliert werden kann, dass der Sauerstoffpartialdruck einen Wert aufweist, der die Erfassung des Anteils der Messgaskomponente im Wesentlichen nicht beeinträchtigt. Die Vorrichtung umfasst schließlich eine zweite Pumpzelle, die an einem zweiten Hohlraum anliegt, wobei eine an dem zweiten Hohlraum anliegende Elektrode, insbesondere durch einen hierzu in die Elektrode eingebrachten Katalysator, dazu eingerichtet ist, die Messgaskomponente mit dem gebundenem Sauerstoff, vorzugsweise ein Stickoxid NOₓ, in der in den zweiten Hohlraum eingeleiteten Atmosphäre zu reduzieren oder abzubauen. Der durch Reduktion oder Abbau der Messgaskomponente in dem zweiten Hohlraum erzeugte Sauerstoff, der vorzugsweise aus der Reduktion des Stickoxids NOₓ stammt, wird mittels des zweiten Pumpstroms in den Referenzgasraum transportiert und dessen Anteil mit Hilfe eines Wertes, auf welchen der zweite Pumpstrom eingeregelt wird, nachgewiesen. Auf die beschriebene Weise lässt sich mittels einer Kaskade von mindestens drei hintereinander angeordneten Pumpzellen der Anteil des Stickoxids NOₓ in einem Gasgemisch, das neben dem Stickoxid NOₓ auch weiterhin Sauerstoff umfasst, in einem Messgasraum bestimmen.

Aus dem Stand der Technik sind weiterhin Einrichtungen zur On-Board-Diagnose (OBD) von Kraftfahrzeugen bekannt. Mit OBD lassen sich insbesondere Komponenten einer Verbrennungskraftmaschine in einem Kraftfahrzeug überwachen, welche einen Einfluss auf eine Eigenschaft eines Abgases der Verbrennungskraftmaschine ausüben. In Bezug auf eine Eigenschaft des Abgases auftretende Fehler werden durch die OBD erfasst und beispielsweise dem Fahrer des Kraftfahrzeugs über eine Kontrollleuchte angezeigt sowie in einem zugehörigen Steuergerät dauerhaft gespeichert. OBD wurde erstmals 1988 vom *California Air Resources Board* (CARB) vor dem Hintergrund eingeführt, dass die Abgasvorschriften nicht nur bei der Zulassung des Kraftfahrzeugs, sondern auch über dessen Lebensdauer sichergestellt werden sollen. Im Rahmen der Weiterentwicklung der sich gegenwärtig im Einsatz befindlichen zweiten Generation der fahrzeugeigenen elektronischen Systeme zur Selbstüberwachung (CARB-OBD II) wird unter anderem daher auch gefordert, dass sich - im Gegensatz zu bekannten elektronischen Steuereinrichtungen - Fehlfunktionen der abgasrelevanten Systeme genau bestimmen und lokalisieren lassen, wofür auch der Begriff "Pinpointing" verwendet wird.

In diesem Zusammenhang spielen Streuungen von Ausgangsströmen aus Stromquellen, welche Toleranzen von bis zu 30% oder mehr aufweisen können, eine besondere Rolle. Die herstellungsbedingten Toleranzen der für die Stromquellen eingesetzten Bauelemente können zusammen mit zusätzlichen Effekten, insbesondere aufgrund einer Alterung der Bauelemente und/oder in Folge von an den Bauelementen anliegenden Temperaturen, dazu führen, dass die Ausgangsströme der Stromquellen in beträchtlicher Höhe von ihren nominellen Werten abweichen können. Da jedoch, wie oben dargelegt, der Sauerstoffpartialdruck in der Referenzzelle proportional zur Größe des Referenz-Pumpstroms ist, können die hierdurch hervorgerufenen Streuungen des Referenz-Pumpstroms durchaus erhebliche Auswirkungen auf Charakteristik und Funktion der Vorrichtungen zum Nachweis mindestens eines Anteils einer Messgaskomponente in einem Messgasraum haben. Weicht auf diese Art der Referenz-Pumpstrom von einem festgestellten Sollwert ab, so kann die Messgenauigkeit der bekannten Sensoren zur Erfassung des Gasanteils deutlich eingeschränkt sein.

Ein Verfahren und eine Vorrichtung zur Erfassung einer Gasspezies ist ferner aus der DE 10 2009 047 359 A1 bekannt. Die DE102009001622 offenbart ein Verfahren zum Nachweis mindestens eines Anteils einer Messgaskomponente mit gebundenem Sauerstoff in einem Gasgemisch.

### Offenbarung der Erfindung

Die vorliegende Erfindung schlägt ein Verfahren und eine Vorrichtung zum Nachweis mindestens eines Anteils einer Messgaskomponente mit gebundenem Sauerstoff in einem Gasgemisch, insbesondere in einem Abgas einer Verbrennungskraftmaschine, in einem Messgasraum durch Erfassen eines Anteils an Sauerstoff, der durch eine Reduktion der Messgaskomponente mit dem gebundenem Sauerstoff erzeugt wird, bei Anwesenheit von molekularem Sauerstoff in einer Vorrichtung, welche mindestens eine erste Pumpzelle, eine Referenzzelle und eine zweite Pumpzelle aufweist, ein Computerprogramm, welches dazu eingerichtet ist, um die Schritte des genannten Verfahrens durchzuführen, ein elektronisches Speichermedium, auf welchem ein derartiges Computerprogramm gespeichert ist, und ein elektronisches Steuergerät, welches insbesondere ein derartiges elektronisches Speichermedium umfasst, mit den Merkmalen der unabhängigen Ansprüche vor, mit welchen sich die sich aus dem Stand der Technik bekannten Nachteile von derartigen Verfahren und Vorrichtungen zumindest teilweise verbessern lassen. Die abhängigen Ansprüche beschreiben hierzu jeweils bevorzugte Ausgestaltungen.

Die vorliegende Erfindung basiert darauf, dass der Nachweis des Anteils an der Messgaskomponente mit gebundenem Sauerstoff, insbesondere mit chemisch gebundenen Sauerstoff, vorzugsweise Stickoxide NOₓ, Schwefeloxide SOₓ und/oder Kohlenoxide COₓ, gemäß dem Stand der Technik auf der Annahme beruht, dass der in dem Referenzgasraum enthaltene Anteil an Sauerstoff möglichst vollständig aus der Reduktion der nachzuweisenden Messgaskomponente, insbesondere der Stickoxide NOₓ, Schwefeloxide SOₓ und/oder Kohlenoxide COₓ, stammt. Auf Basis dieser Annahme wird dementsprechend davon ausgegangen, dass der Wert, auf welchen der zweite Pumpstrom eingeregelt wird, somit proportional zu dem Anteil der nachzuweisenden Messgaskomponente, insbesondere der Stickoxide NOₓ, Schwefeloxide SOₓ und/oder Kohlenoxide COₓ, sei. Es konnte jedoch festgestellt werden, dass zusätzlich auftretende Effekte in einer Vorrichtung, welche mindestens eine erste Pumpzelle, eine Referenzzelle und eine zweite Pumpzelle aufweist und welche dazu eingerichtet ist, um das vorliegende Verfahren auszuführen, dazu in der Lage sind, den Nachweis des Anteils an der nachzuweisenden Messgaskomponente, insbesondere an dem Stickoxid NOₓ, dem Schwefeloxid SOₓ und/oder dem Kohlenoxid COₓ, zu verfälschen.

Wie oben bereits beschrieben, wird der durch Reduktion oder Abbau der Messgaskomponente erzeugte Sauerstoff, welcher vorzugsweise aus der Reduktion des Stickoxids NOₓ, des Schwefeloxids SOₓ und/oder des Kohlenoxids COₓ, stammt, mittels des zweiten Pumpstroms in den Referenzgasraum transportiert, um auf diese Weise den Anteil der Messkomponente mit Hilfe eines Wertes, auf welchen der zweite Pumpstrom eingeregelt wird, nachzuweisen. Allerdings mündet neben diesem Sauerstoffionenstrom, dessen Sauerstoffionen aus der Reduktion der Messgaskomponente mit dem gebundenen Sauerstoff stammen, ein weiterer Sauerstoffionenstrom aus dem Sauerstoffionenstrom, welcher von Sauerstoffionen, die in der ersten Pumpzelle aus dem molekularen Sauerstoff gebildet und über den Messgasraum in den Referenzgasraum transportiert werden, ebenfalls in den Referenzgasraum. Im Allgemeinen verhalten sich die entsprechenden Sauerstoffionenströme derart, dass bei einer geringen Konzentration an der Messgaskomponente mit dem gebundenen Sauerstoff der Sauerstoffionenstrom, welcher aus der ersten Pumpzelle stammt, dominiert, während bei einer hohen Konzentration an der Messgaskomponente mit dem gebundenen Sauerstoff der durch Reduktion der Messgaskomponente erzeugte Sauerstoffionenstrom dem aus der ersten Pumpzelle stammenden Sauerstoffionenstrom etwa um das Dreifache übersteigt.

Entsprechend einer Zusammensetzung der beiden Sauerstoffionenströme ändert sich die Sauerstoffionen-Konzentration in dem Referenzgasraum derart, dass die oben genannte Annahme in der Praxis nicht vollständig zutrifft. Da Luft aus dem Referenzgasraum entlang der Elektrodenanschlüsse entweichen kann, bleibt die Referenzzelle von einer Änderung der Sauerstoffionen-Konzentration unbeeinträchtigt; insbesondere besteht keine Gefahr einer Beeinträchtigung der Funktion der Referenzzelle oder gar ihrer Zerstörung. Allerdings führt die beschriebene Änderung der Sauerstoffionen-Konzentration in dem Referenzgasraum zu einer Verschiebung des Arbeitspunktes der Referenzzelle. Dadurch führt die oben erwähnte, in der Praxis nur ungefähr zutreffende Annahme, dass der in dem Referenzgasraum enthaltene Anteil an Sauerstoff vollständig aus der Reduktion der nachzuweisenden Messgaskomponente stammt, dazu, dass die beschriebene Änderung der Sauerstoffionen-Konzentration in dem Referenzgasraum somit einen Einfluss auf eine Genauigkeit der vorliegenden Bestimmung haben kann.

Es wird daher ein Verfahren zum Nachweis mindestens eines Anteils einer Messgaskomponente mit gebundenem Sauerstoff in einem Gasgemisch vorgeschlagen, in welchem ein Anteil an Sauerstoff, der durch eine Reduktion der Messgaskomponente mit dem gebundenen Sauerstoff erzeugt wird, bei Anwesenheit von molekularem Sauerstoff erfasst wird. Als Messgaskomponente mit gebundenem Sauerstoff dienen in erster Linie Stickoxide NOₓ, Schwefeloxide SOₓ und/oder Kohlenoxide COₓ, welche neben dem chemisch gebundenen Sauerstoff O weiterhin einen Anteil an Stickstoff N, Schwefel S und/oder Kohlenstoff C umfassen. Grundsätzlich eignet sich das vorliegende Verfahren jedoch für jede Messgaskomponente, welche über gebundenen Sauerstoff, vorzugsweise chemisch gebundenen Sauerstoff verfügt, solange sich aus der Messgaskomponente durch eine Reduktion mittels eines dafür geeigneten Katalysators, welcher vorzugsweise in mindestens einer ansteuerbaren Elektrode eingerichtet ist, zumindest ein Teil des gebundenen Sauerstoffs aus der Messgaskomponente separieren und in der separierten Form nachweisen lässt. In einer bevorzugten Ausgestaltung ist die Messgaskomponente mit dem gebundenen Sauerstoff in einem Abgas einer Verbrennungskraftmaschine, insbesondere im Kraftfahrzeugbereich, enthalten.

In der Praxis umfasst das Gasgemisch jedoch neben der Messgaskomponente mit dem gebundenen Sauerstoff, welcher durch deren Reduktion aus der Messgaskomponente separiert wird, weiterhin molekularen Sauerstoff O₂, welcher in einer üblichen erdgebundenen Atmosphäre in einem nennenswerten Anteil vorliegt. Aus diesem Grunde ist es daher erforderlich, das Verfahren in einer Vorrichtung durchzuführen, welche dazu eingerichtet ist, um zunächst den in dem Gasgemisch vorhandenen molekularen Sauerstoff aus dem Gasgemisch zu entfernen, bevor durch eine Reduktion der Messgaskomponente hieraus ebenfalls Sauerstoff erzeugt wird, insbesondere um auf diese Weise den Nachweis des Anteils der Messgaskomponente in dem Gasgemisch möglichst unbeeinflusst von der zusätzlichen Komponente aus dem molekularen Sauerstoff durchführen zu können.

Hierzu wird eine Vorrichtung eingesetzt, welche mindestens eine erste Pumpzelle, eine Referenzzelle und eine zweite Pumpzelle aufweist. Unter einer "Pumpzelle" wird hierbei eine Kammer verstanden, welche über einen Festkörperelektrolyten verfügt, welcher zumindest bei hohen Temperaturen für Sauerstoffionen leitfähig ist, wobei mindestens zwei Elektroden vorgesehen sind, mit welchen sich eine Potentialdifferenz über den Festkörperelektrolyten ausbilden lässt und/oder durch Anlegen eines Pumpstroms ein Sauerstoffionenstrom über den Festkörperelektrolyten hervorgerufen werden kann.

Das vorliegende Verfahren umfasst die Schritte a) bis e), wobei zumindest einige der genannten Schritte nacheinander und/oder zumindest teilweise gleichzeitig durchgeführt werden können. Darüber hinaus ist eine Ausführung von weiteren Schritten, welche in der vorliegenden Anmeldung beschrieben sein können oder nicht, ebenfalls möglich.

Gemäß Schritt a) wird ein erster Pumpstrom derart in der erste Pumpzelle erzeugt, dass ein erster Anteil von Sauerstoffionen, welche sich aus dem molekularen Sauerstoff, der neben der Messgaskomponente mit dem gebundenen Sauerstoff in dem Gasgemisch vorhanden ist, bilden, zwischen dem Messgasraum und einer Umgebung der Vorrichtung transportiert werden. Da die erste Pumpzelle insbesondere über einen oben beschriebenen Aufbau verfügt, kann der erste Pumpstrom auf einen ersten Wert eingestellt werden, um dem gewünschten ersten Anteil von Sauerstoffionen über den Festkörperelektrolyten der ersten Pumpzelle in den Messgasraum zu bringen.

Gemäß Schritt b) wird ein Referenz-Pumpstrom derart an die Referenzzelle, welche auch als "Nernst-Zelle" bezeichnet werden kann, angelegt, dass ein zweiter Anteil der Sauerstoffionen, welche sich in dem Messgasraum oder in der Umgebung der Vorrichtung befinden, in den Referenzgasraum transportiert wird. Hierbei wird insbesondere der Wert für den Referenz-Pumpstrom derart eingestellt, dass sich ein festgelegter Anteil der Sauerstoffionen in dem Referenzgasraum ausbildet. Um darüber hinaus ein festgelegtes Verhältnis zwischen dem ersten Anteil der Sauerstoffionen in der ersten Pumpzelle und dem zweiten Anteil der Sauerstoffionen in dem Referenzgasraum herzustellen, kann hierzu der Wert für den ersten Pumpstrom entsprechend eingestellt werden.

Die in den Verfahrensschritten a) und b) eingesetzte Pumpzelle und Referenzzelle bilden zusammen den so genannten "Sauerstoffteil" der vorliegenden Vorrichtung zum Nachweis des Anteils der Messgaskomponente mit dem gebundenen Sauerstoff bei Anwesenheit von molekularem Sauerstoff, unter dessen Verwendung insbesondere der Anteil des molekularen Sauerstoffs in dem Gasgemisch nachgewiesen werden kann. Von dem während der Schritte a) und b) angelegten ersten Pumpstrom und Referenz-Pumpstrom bleibt der Anteil der Messgaskomponente mit dem gebundenen Sauerstoff, insbesondere an Stickoxiden NOₓ, im Wesentlichen unbeeinflusst und gelangt auf diese Weise in die zweite Pumpzelle, in welchen gemäß Schritt c) die Messgaskomponente mit dem gebundenen Sauerstoff mittels Katalyse derart zersetzt wird, dass dadurch aus dem in der Messgaskomponente zuvor gebundenen Sauerstoff weitere Sauerstoffionen erzeugt werden. Hierbei erfolgt das Zersetzen der Messgaskomponente mit dem gebundenen Sauerstoff vorzugsweise durch eine katalytische Wirkung mindestens eine der Elektroden, welche an der zweiten Pumpzelle anliegen. Im Falle, dass die Messgaskomponente mit dem gebundenen Sauerstoff ein Stickoxid NOₓ umfasst, zersetzen die Elektroden, welche an der zweiten Pumpzelle anliegen, das Stickoxid NOₓ vorzugsweise möglichst vollständig in molekularen Sauerstoff O₂ und molekularen Stickstoff N₂. Der auf diese Weise erzeugte molekulare Stickstoff N₂ diffundiert ohne wesentliche Hindernisse aus der vorliegenden Vorrichtung heraus, während gemäß Schritt d) durch Anlegen eines zweiten Pumpstroms an die zweite Pumpzelle ein Anteil von weiteren Sauerstoffionen, welche aus dem weiteren molekularen Sauerstoff gebildet werden, in den Referenzgasraum transportiert wird. Diese Betrachtung gilt sinngemäß auch für den Fall, dass die Messgaskomponente mit dem gebundenen Sauerstoff Schwefeloxid SOₓ, und/oder Kohlenoxid COₓ umfasst, aus welchen neben dem molekularen Sauerstoff O₂ weiterhin ein Anteil an molekularen Schwefel S und/oder Kohlenstoff C erzeugt wird, welcher mittels einer geeigneten Einrichtung aus vorliegenden Vorrichtung entfernt wird. Aus einem Wert für den zweiten Pumpstrom wird im Stand der Technik entsprechend der oben dargelegten Annahme üblicherweise der Anteil der Messgaskomponente mit dem gebundenen Sauerstoff ermittelt.

Insbesondere um aufgrund der oben beschriebenen Fehlerquellen eine Verfälschung des Anteils an der nachzuweisenden Messgaskomponente, insbesondere an dem Stickoxid NOₓ, dem Schwefeloxid SOₓ und/oder dem Kohlenoxid COₓ, zu vermeiden, wird gemäß Schritt e) eine Summe von Strömen, welche aus dem Referenz-Pumpstrom und den zweiten Pumpstrom gebildet wird, konstant gehalten. Unter einer Konstanthaltung einer Summe von Strömen wird hierbei ein Vorgehen verstanden, welches bewirkt, dass der Wert für die Summe der Ströme innerhalb eines festgelegten Bereichs verbleibt, welcher oberhalb einer festgelegten Mindestschwelle und unterhalb einer festgelegten Maximalschwelle liegt.

Erfindungsgemäß ist vorgesehen, den Wert des Referenz-Pumpstroms derart einzustellen, dass die Bedingung einer Konstanz der beiden Ströme gemäß Schritt e) erfüllt wird und dass aus dem Wert des zweiten Pumpstroms der Anteil der Messgaskomponente mit dem gebundenen Sauerstoff bestimmt wird. Da auf diese Weise der Einfluss, welcher der oben beschriebene Sauerstoffionenstrom, welcher aus der ersten Pumpzelle in den Referenzgasraum eintritt, ausgeschlossen werden kann, lässt sich so insbesondere eine Genauigkeit des Nachweises des Anteils der Messkomponente mit dem gebundenen Sauerstoff erhöhen.

In einem weiteren Aspekt umfasst die vorliegende Erfindung ein Computerprogramm, welches dazu eingerichtet ist, um die Schritte des beschriebenen Verfahrens durchzuführen.

In einem weiteren Aspekt umfasst die vorliegende Erfindung ein elektronisches Speichermedium, welches dazu eingerichtet ist, um ein derart ausgestattetes Computerprogramm zu speichern.

In einem weiteren Aspekt umfasst die vorliegende Erfindung ein elektronisches Steuergerät, welches mindestens eine Einrichtung zur Erfassung, zur Einstellung und/oder zur Regelung jeweils eines Wertes für den ersten Pumpstrom, den Referenz-Pumpstrom und/oder den zweiten Pumpstrom aufweist. In einer bevorzugten Ausgestaltung weist das elektronische Steuergerät mindestens ein elektronisches Speichermedium auf, auf welchem ein Computerprogramm gespeichert ist, welches dazu eingerichtet ist, um die Schritte des beschriebenen Verfahrens durchzuführen. Hierbei ist es unerheblich, ob das elektronische Steuergerät gemäß der vorliegenden Erfindung ein- oder mehrteilig ausgestaltet ist, d.h. ob das elektronische Speichermedium und die mindestens eine Einrichtung in Form einer einzelnen Vorrichtung oder in Form einer oder mehrerer separater Vorrichtungen vorliegen.

In einer besonders bevorzugten Ausgestaltung ist es vorteilhaft, die mindestens eine Einrichtung in drei - tatsächlich oder nur gedanklich - voneinander getrennte Teile zu untergliedern, insbesondere
- in eine erste Einrichtung zur Erfassung des Wertes für den Referenz-Pumpstrom;
- in eine zweite Einrichtung zur Einstellung des Wertes für den Referenz-Pumpstrom; und
- in eine dritte Einrichtung zur Regelung des Wertes für den Referenz-Pumpstrom.

Hierbei können insbesondere die erste Einrichtung zur Erfassung des Wertes für den Referenz-Pumpstrom und die zweite Einrichtung zur Einstellung des Wertes für den Referenz-Pumpstrom sowohl als gesonderte Einheiten ausgestaltet sein oder in Form einer einzigen Einheit zusammengefasst sein.

In einer bevorzugten Ausgestaltung verfügt hierbei die erste Einrichtung zur Erfassung des Wertes für den Referenz-Pumpstrom über mindestens einen Messwiderstand, welcher zur Erfassung des Wertes für den Referenz-Pumpstrom vorgesehen ist. Auf diese Weise kann die erste Einrichtung dazu eingesetzt werden, um eine Größe des Referenz-Pumpstroms oder eines hierzu proportionalen elektrischen Signals zu messen. Wie in den Ausführungsbeispielen näher erläutert wird, kann der Messwiderstand hierbei vorzugsweise ausgewählt werden aus
- einem Widerstand für die Bestimmung des Referenz-Pumpstroms;
- einem Widerstand für die Bestimmung des zweiten Pumpstroms;
- einem Widerstand, welcher in eine elektrisch leitende Verbindung von dem elektronischen Steuergerät zu einer Referenzelektrode der Referenzzelle eingebracht ist; oder
- einem Innenwiderstand eines in das elektronische Steuergerät eingebrachten Analog-Digital-Wandlers.

In einer bevorzugten Ausgestaltung verfügt die zweite Einrichtung zur Einstellung des Wertes für den Referenz-Pumpstrom über mindestens eine einstellbare Stromquelle. Unter der "Stromquelle" wird hierbei eine elektronische Einheit verstanden, welche über mindestens einen Eingang zur Aufnahme eines Steuersignals, über mindestens eine Einheit zur Erzeugung eines Stromsignals und über mindestens einen Ausgang zur Abgabe des Stromsignals verfügt, wobei mittels des Steuersignals eine Größe des Stroms und/oder eine Richtung des Stroms, vorzugsweise gleichzeitig die Größe des Stroms und die Richtung des Stroms, festgelegt werden können. Hierbei kann die einstellbare Stromquelle entweder spannungsgesteuert oder stromgesteuert ausgestaltet sein, d.h. dass im Falle der spannungsgesteuerten Stromquelle das Steuersignal ein Spannungssignal ist, während im Falle der stromgesteuerten Stromquelle das Steuersignal ein Stromsignal darstellt.

In einer besonderen Ausgestaltung kann die zweite Einrichtung zur Einstellung des Wertes für den Referenz-Pumpstrom über zwei gesonderte, jeweils unabhängig voneinander einstellbare Stromquellen verfügen, welche derart zusammengeschaltet sind, dass die beiden gesondert einstellbaren Stromquellen eine zueinander entgegengesetzte Potentialreferenz aufweisen. Auf diese Weise kann die zweite Einrichtung den Wert für den Referenz-Pumpstrom umkehren und so sowohl in einer ersten Stromrichtung als auch in einer zweiten Stromrichtung, welche ein gegenüber der ersten Stromrichtung umgekehrtes Vorzeichen aufweist, den Wert für den Referenz-Pumpstrom bereitstellen.

In einer besonders bevorzugten Ausgestaltung ist die dritte Einrichtung zur Regelung des Wertes für den Referenz-Pumpstrom derart ausgestaltet, dass die dritte Einrichtung das Eingangssignal für die mindestens eine einstellbare Stromquelle bereitstellt, welches als Regler-Stellgröße dient. Als Eingangsgrößen für die dritte Einrichtung zur Regelung des Wertes für den Referenz-Pumpstrom können hierbei vorzugsweise der Wert für den Referenz-Pumpstrom, welcher insbesondere durch die erste Einrichtung zur Erfassung des Wertes für den Referenz-Pumpstrom bereitgestellt wird, und eine Referenzgröße und/oder eine Steuergröße für den Wert für den Referenz-Pumpstrom dienen.

Das auf die hier beschriebene Weise ausgestaltete elektronische Steuergerät weist zahlreiche Vorteile auf, insbesondere im Hinblick auf eine Verbesserung der Genauigkeit der Erfassung der Messgaskomponente, insbesondere der Stickoxide, in dem Gasgemisch, auf eine Verbesserung des dynamischen Verhaltens der vorliegenden Vorrichtung sowie auf erweiterte Möglichkeiten zur Durchführung der On-Board-Diagnose (OBD) eines mit der vorliegenden Vorrichtung ausgestatteten Kraftfahrzeuges.

Kann der Ausgangsstrom der mindestens einen einstellbaren Stromquelle genau eingestellt und bestimmt werden, so kann es auf diese Weise möglich werden, eventuell auftretende Streuungen der einstellbaren Stromquelle zu kompensieren. Mittels des einstellbaren Wertes für den Referenz-Pumpstrom kann hierbei der Sauerstoffpartialdruck in der Referenzzelle entsprechend gesteuert werden. Auf diese Weise lässt sich eine Übertragungsfunktion einer Regelstrecke, welche durch die dritte Einrichtung zur Regelung des Wertes für den Referenz-Pumpstrom geregelt wird, beeinflussen und entsprechend anpassen. Weiterhin kann auf diese Weise ein Einfluss des zweiten Pumpstroms, welcher von dem Anteil der Messgaskomponente mit dem gebundenen Sauerstoff in dem Gasgemisch abhängt, auf den Sauerstoffpartialdruck in der Referenzzelle ebenfalls kompensiert werden. Darüber hinaus kann eine genaue Erfassung des Wertes für den Referenz-Pumpstrom ein genaues Pinpointing von Fehlfunktionen von Komponenten des vorliegenden Sensorelements ermöglichen.

In einem weiteres Aspekt umfasst die vorliegende Erfindung eine Vorrichtung zum Nachweis des mindestens einen Anteils der Messgaskomponente mit dem gebundenen Sauerstoff in dem Gasgemisch, insbesondere in dem Abgas der Verbrennungsmaschine, wobei derjenige Anteil an Sauerstoff, welcher durch die Reduktion der Messgaskomponente mit dem gebundenen Sauerstoff erzeugt wird, bei Anwesenheit des molekularen Sauerstoffs in der Vorrichtung in dem Messgasraum erfasst wird. Die Vorrichtung umfasst hierbei mindestens eine erste Pumpzelle, mindestens eine Referenzzelle, mindestens eine zweite Pumpzelle und mindestens ein hier beschriebenes elektronisches Steuergerät. Für weitere Einzelheiten im Bezug auf die aufgeführten Komponenten der Vorrichtung wird auf die Beschreibung des Verfahrens und/oder auf die Beschreibung des elektronischen Steuergeräts verwiesen.

### Kurze Beschreibung der Figuren

Bevorzugte Ausführungsbeispiele der vorliegenden Erfindung sind in den Figuren dargestellt und werden in der nachfolgenden Beschreibung näher erläutert. Hierbei zeigen im Einzelnen:
- Figur 1: ein bevorzugtes Ausführungsbeispiel des vorliegenden Verfahrens unter Verwendung einer besonders vorteilhaften Vorrichtung zum Nachweis mindestens eines Anteils einer Messgaskomponente mit gebundenem Sauerstoff;
- Figur 2: ein besonders bevorzugtes Ausführungsbeispiel für ein elektronisches Steuergerät für die Vorrichtung zum Nachweis des Anteils der Messgaskomponente mit dem gebundenem Sauerstoff;
- Figur 3: ein erstes Ausführungsbeispiel für eine Schaltung zur Erfassung eines Wertes für einen Referenz-Pumpstrom;
- Figur 4: ein zweites Ausführungsbeispiel für die Schaltung zur Erfassung des Wertes für den Referenz-Pumpstrom;
- Figur 5: ein drittes Ausführungsbeispiel für die Schaltung zur Erfassung des Wertes für den Referenz-Pumpstrom;
- Figur 6: ein viertes Ausführungsbeispiel für die Schaltung zur Erfassung des Wertes für den Referenz-Pumpstrom;
- Figur 7: ein Ausführungsbeispiel für eine spannungsgesteuerte Stromquelle zur Einstellung eines Wertes für den Referenz-Pumpstrom;
- Figur 8: ein Ausführungsbeispiel für eine stromgesteuerte Stromquelle zur Einstellung des Wertes für den Referenz-Pumpstrom;
- Figur 9: ein Ausführungsbeispiel für eine bipolar stromgesteuerte Stromquelle zur Einstellung eines Wertes mit beliebigem Vorzeichen für den Referenz-Pumpstrom;
- Figur 10: ein Ausführungsbeispiel für eine Einrichtung zur Regelung des Wertes für den Referenz-Pumpstrom; und
- Figur 11: ein Ausführungsbeispiel für eine Umsetzung der Regelung des Wertes für den Referenz-Pumpstrom.

### Ausführungsformen der Erfindung

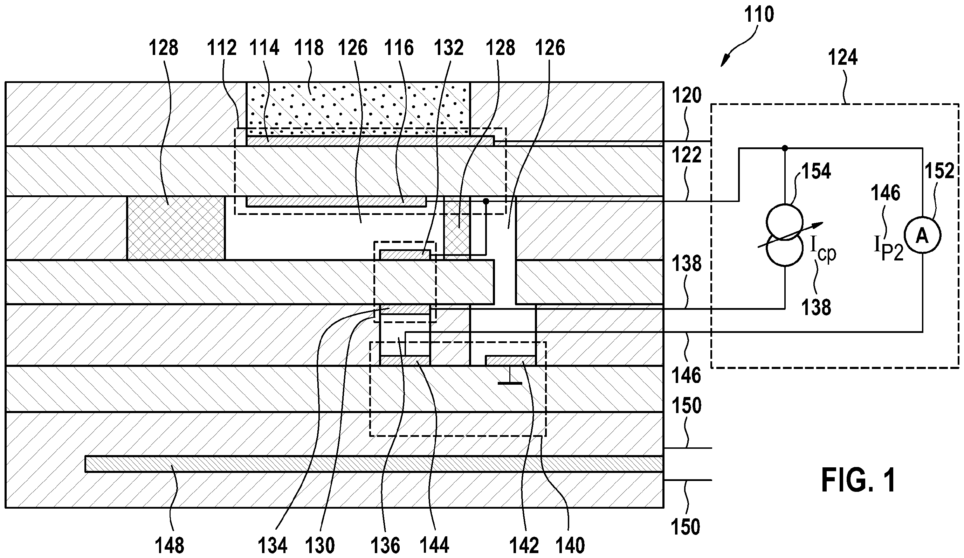

In Figur 1 ist ein bevorzugtes Ausführungsbeispiel des vorliegenden Verfahrens unter Verwendung einer besonders vorteilhaften Vorrichtung 110 zum Nachweis mindestens eines Anteils einer Messgaskomponente mit gebundenem Sauerstoff, im Folgenden beispielhaft als Stickoxid NOₓ bezeichnet, in einem Gasgemisch, beispielhaft einem Abgas einer Verbrennungskraftmaschine, dargestellt.

Die Vorrichtung 110 umfasst eine erste Pumpzelle 112, welche zwischen einer äußeren Pumpelektrode 114 und einer inneren Pumpelektrode 116 ausgebildet ist. Die äußere Pumpelektrode 114, welche mittels einer porösen Aluminiumoxidschicht 118 von der der Umgebung der Vorrichtung 110 getrennt ist, verfügt hierbei über eine erste elektrisch leitende Verbindung, über welche sich ein erster Pumpstrom 120 in der ersten Pumpzelle 112 erzeugen lässt. Um einen vollständigen Stromkreis zu erhalten, verfügt die innere Pumpelektrode 116 ebenfalls über eine elektrisch leitende Verbindung, welche zu einem gemeinsamen Anschluss 122 eines externen elektronischen Steuergeräts 124 führt. Durch Erzeugen des ersten Pumpstroms 120 in der erste Pumpzelle 112 lässt sich ein erster Anteil von Sauerstoffionen, welche aus molekularem Sauerstoff aus dem Gasgemisch gebildet werden, zwischen einem Messgasraum 126 und der Umgebung der Vorrichtung 110 transportieren. In dem Eintrittsweg aus der Umgebung zu dem hier in Form von zwei getrennten Hohlräumen ausgestalteten Messgasraum 126 sind zwei Diffusionsbarrieren 128 vorhanden.

Die Vorrichtung verfügt weiterhin über eine Referenzzelle 130, an welcher eine Nernst-Elektrode 132 und eine Referenzelektrode 134 anliegen. Während die Nernst-Elektrode 132 über eine elektrisch leitende Verbindung zusammen mit der inneren Pumpelektrode 116 zu dem gemeinsamen Anschluss 122 verfügt, weist die Referenzelektrode 134 eine elektrisch leitende Verbindung zu einer Versorgungsspannung auf. Ein zweiter Anteil der Sauerstoffionen aus dem Messgasraum 126 und/oder aus der Umgebung der Vorrichtung 110 wird in einen Referenzgasraum 136 durch Anlegen eines Referenz-Pumpstroms 138 zwischen der Versorgungsspannung und dem gemeinsamen Anschluss 122 transportiert. Hierbei wird der Wert für den Referenzpumpstrom 138 derart eingestellt, dass sich ein festgelegter Anteil der Sauerstoffionen in dem Referenzgasraum 136 ausbildet. Vorzugsweise wird in diesem Zusammenhang auch der Wert für den ersten Pumpstrom 120 derart eingestellt, dass sich ein festgelegtes Verhältnis zwischen dem ersten Anteil der Sauerstoffionen in dem Messgasraum und dem zweiten Anteil der Sauerstoffionen in dem Referenzgasraum 136 ergibt.

Die in dem Gasgemisch ebenfalls enthaltene Messgaskomponente Stickoxid NOₓ mit dem gebundenen Sauerstoff gelangt insbesondere durch Diffusion weitgehend unbeeinflusst in die zweite Pumpzelle 140, welche auch als "NOₓ-Pumpzelle" bezeichnet wird. An die zweite Pumpzelle 140 grenzen eine NOₓ-Pumpelektrode 142 und eine NOₓ-Gegenelektrode 144 an. Wenigstens eine der beiden Elektroden NOₓ-Pumpelektrode 142 und/oder NOₓ-Gegenelektrode 144 sind derart ausgestaltet, dass bei Anlegen einer Spannung mittels Katalyse aus der Messgaskomponente NOₓ weiterer molekularer Sauerstoff erzeugt werden kann, welcher in der zweiten Pumpzelle 140 gebildet wird.

Während die NOₓ-Pumpelektrode 142 eine elektrisch leitende Verbindung aufweist, welche zu dem gemeinsamen Anschluss 122 führt, weist die NOₓ-Gegenelektrode 144 eine elektrisch leitende Verbindung auf, über welche ein zweiter Pumpstrom 146 an die zweite Pumpzelle 140 angelegt werden kann. Bei Anlegen eines zweiten Pumpstroms 146 an die zweite Pumpzelle 140 wird ein Anteil von weiteren Sauerstoffionen, welche aus dem weiteren molekularen Sauerstoff gebildet wurden, in den Referenzgasraum 136 transportiert.

Die Vorrichtung 110 verfügt weiterhin über ein Heizelement 148, welches eine Heizleitung 150 aufweist, über welche ein Heizstrom in das Heizelement 148 eingebracht werden kann, welches mittels Erzeugen einer Heizleistung die Vorrichtung 110 auf die gewünschte Temperatur bringen kann.

Zur Durchführung des vorliegenden Verfahrens zum Nachweis des Anteils einer Messgaskomponente mit gebundenem Sauerstoff in einem Gasgemisch verfügt das elektronische Steuergerät 124 über eine Messvorrichtung 152 zur Bestimmung des Wertes des zweiten Pumpstroms 146 sowie über eine Regelungseinrichtung 152, mit deren Hilfe der Wert des Referenzpumpstroms 138 derart geregelt werden kann, dass eine Summe von Strömen, welche aus dem Referenz-Pumpstrom 138 und dem zweiten Pumpstrom 146 gebildet wird, konstant gehalten werden kann. Weitere Bestandteile, welche das elektronische Steuergerät 124 aufweisen kann, sind in der Figur 1 aus Gründen der Übersichtlichkeit nicht dargestellt.

Unter einer Konstanthaltung einer Summe von Strömen wird hierbei ein Vorgehen verstanden, welches bewirkt, dass der Wert für die Summe der Ströme innerhalb eines festgelegten Bereichs verbleibt, welcher oberhalb einer festgelegten Mindestschwelle und unterhalb einer festgelegten Maximalschwelle liegt. Auf diese Weise können in der Vorrichtung 110 auftretende Schwankungen, welche sich trotz aller technischen Maßnahmen nicht völlig unterbinden lassen, dennoch mit berücksichtigt werden.

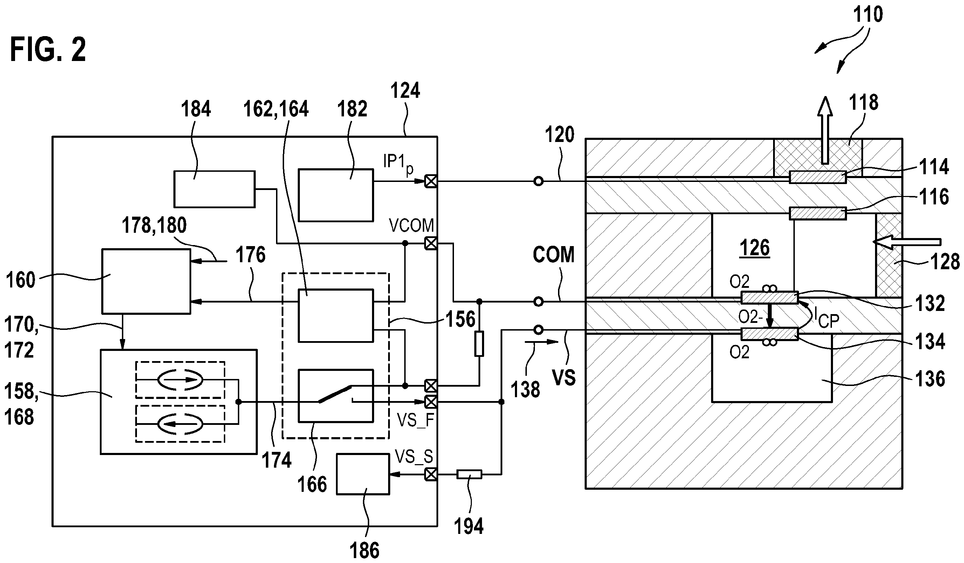

In Figur 2 ist ein besonders bevorzugtes Ausführungsbeispiel für das elektronische Steuergerät 124 zur Verwendung in der vorliegenden Vorrichtung 110 zum Nachweis des Anteils der Messgaskomponente mit dem gebundenen Sauerstoff dargestellt. Das elektronische Steuergerät 124 verfügt hierbei über eine Schaltung 156 zur Erfassung des Wertes für den Referenz-Pumpstrom 138, eine einstellbare Stromquelle 158 sowie über einen Regler 160 zur Regelung des Wertes für den Referenz-Pumpstrom 138.

Die Schaltung 156 zur Erfassung des Wertes für den Referenz-Pumpstrom 138 weist in dem in Figur 2 dargestellten Ausführungsbeispiel einen Analog-Digital-Wandler 162 auf, welcher über einen Innenwiderstand 164 verfügt, welcher je nach Wahl einer Einstellung eines Schalters 166 erfassbar ist. Der Innenwiderstand 164 des Analog-Digital-Wandlers 162 dient hierbei als Messwiderstand, welcher zur Erfassung des Wertes für den Referenz-Pumpstrom 138 eingesetzt werden kann. Weitere Ausgestaltungen sind möglich und werden in den unten stehenden Ausführungsbeispielen beschrieben.

Die einstellbare Stromquelle 158 zur Einstellung des Wertes für den Referenz-Pumpstrom 138 ist in dem Ausführungsbeispiel gemäß Figur 2 als eine konfigurierbare Stromquelle 168 mit einer umkehrbaren Polarität ausgeführt. Die einstellbare Stromquelle 158 erhält hierbei als Eingangssignal 170 eine von dem Regler 160 bereitgestellte Stellgröße 172. Das Ausgangssignal 174 der einstellbaren Stromquelle 158 wird in dem vorliegenden Ausführungsbeispiel dem Schalter 166 zugeführt und, je nach Einstellung des Schalters 166 als Referenz-Pumpstrom 138 auf die Referenz-Elektrode 134 gegeben oder zur Bestimmung des Innenwiderstandes 164 des Analog-Digital-Wandlers 162 eingesetzt.

Der Regler 160, welcher die Stellgröße 172 zur Steuerung des Eingangssignals 170 der einstellbaren Stromquelle 158 bereitstellt, erhält als erste Eingangsgröße 176 den von der Schaltung 156 erfassten Wert für den Referenz-Pumpstrom 138 bereitgestellt. Als zweite Eingangsgröße 178 des Reglers 160 wird ein vorgegebener Referenzwert 180 bereitgestellt.

Weiterhin verfügt das in Figur 2 dargestellte exemplarische elektronische Steuergerät 124 über eine zweite einstellbare Stromquelle 182 zur Bereitstellung eines Wertes für den ersten Pumpstrom 120, über eine Spannungsquelle 184 zur Bereitstellung eines gemeinsamen Potentials für die Referenzzelle 130 und über einen zweiten Analog-Digital-Wandler 186 zur Erfassung eines Wertes für die Nernst-Spannung.

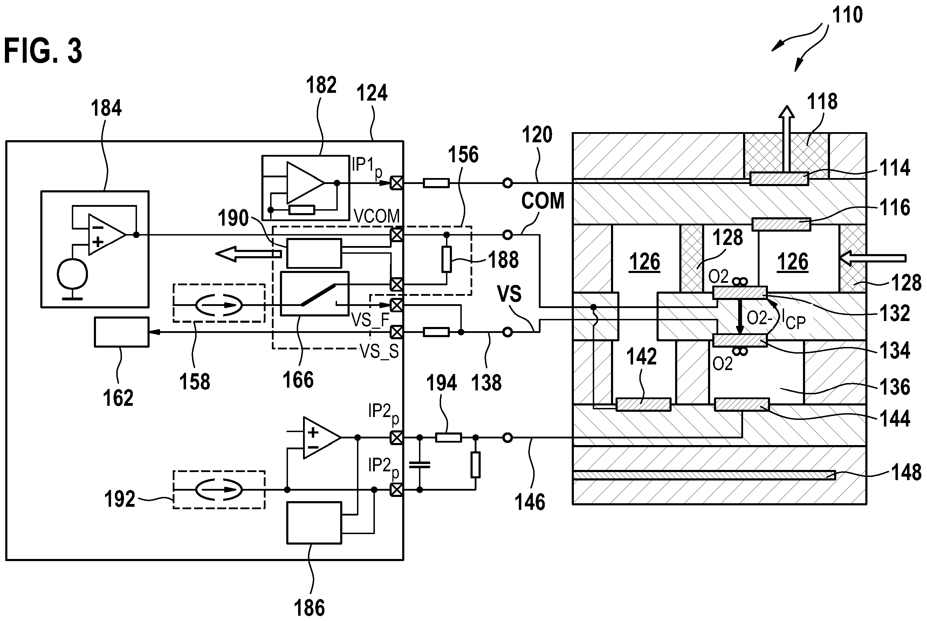

In den nachfolgenden Figuren 3 bis 6 sind verschiedene Ausführungen für die Schaltung 156 zur Erfassung des Wertes für den Referenz-Pumpstrom 138 dargestellt. Für Einzelheiten, welche in der nachfolgenden Beschreibung der Figuren 3 bis 6 nicht erwähnt werden, wird auf die obige Beschreibung der Figur 2 verwiesen.

In dem Ausführungsbeispiel gemäß Figur 3 verfügt die Schaltung 156 zur Erfassung des Wertes für den Referenz-Pumpstrom 138 über einen zusätzlichen Messwiderstand 188, welcher gemäß der dargestellten Schaltung 156 zur Bestimmung des Wertes für den Referenz-Pumpstrom eingesetzt wird. Der von der einstellbaren Stromquelle 158 bereitgestellte Strom wird hierbei zunächst zu dem Schalter 166 geführt, welcher, je nach Einstellung des Schalters 166, den Referenz-Pumpstrom 138 zur Referenz-Elektrode 134 leitet oder auf den zusätzlichen hochohmigen Messwiderstand 188 (Shunt) weiter geleitet wird. Letzteres kann vorteilhaft insbesondere in einer Betriebsphase erfolgen, in welcher ein Anlegen des Referenz-Pumpstroms 138 an dem Sensorelement nicht erforderlich ist, zum Beispiel bei Beginn der Startphase. Der Wert für den Referenz-Pumpstrom 138 wird hierbei mittels eines zusätzlichen Analog-Digital-Wandlers 190 ermittelt. Das in Figur 3 dargestellte elektronische Steuergerät 124 verfügt weiterhin über eine dritte einstellbare Stromquelle 192 zur Erzeugung des zweiten Pumpstroms 146.

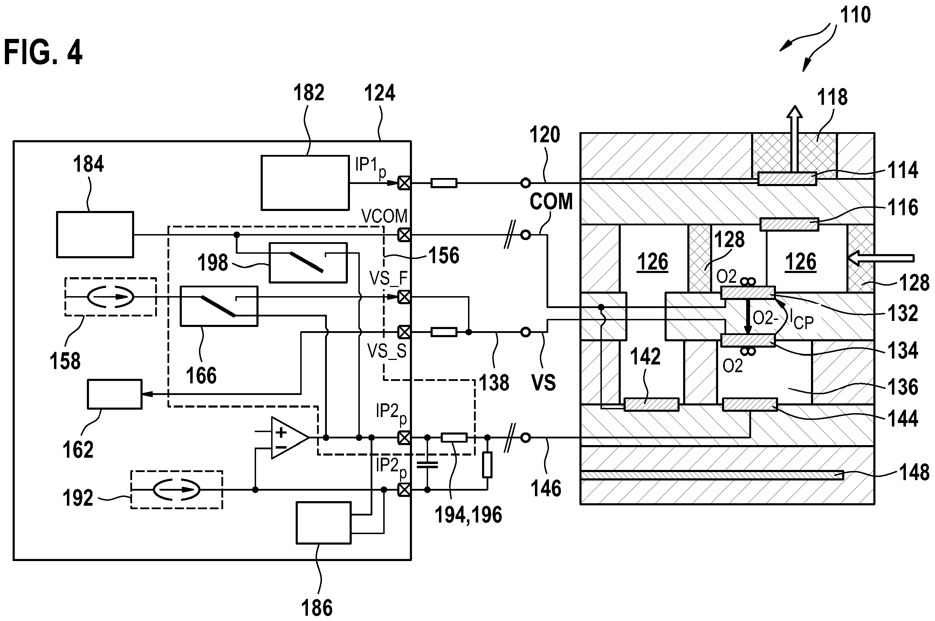

In Figur 4 ist ein weiteres Ausführungsbeispiel für die Schaltung 156 zur Erfassung des Wertes für den Referenz-Pumpstrom 138 dargestellt. In diesem Ausführungsbeispiel wird ein in dem elektronischen Steuergerät 124 vorhandener Messwiderstand 194 zur Erfassung eines Wertes für den zweiten Pumpstrom 146 als Messwiderstand 196 zur Erfassung des Wertes für den Referenz-Pumpstrom 138 eingesetzt. In einem Betriebszustand, in welchem das Sensorelement nicht aktiv und damit sehr hochohmig ist, kann der Wert für den Referenz-Pumpstrom 138 mittels des Schalters 166 und eines weiteren Schalters 198 auf den Messwiderstand 194 zur Bestimmung des zweiten Pumpstroms 146 geschaltet werden, um auf diese Weise mittels des zweiten Analog-Digital-Wandlers 186 den Wert für den Referenz-Pumpstrom 138 zu bestimmen.

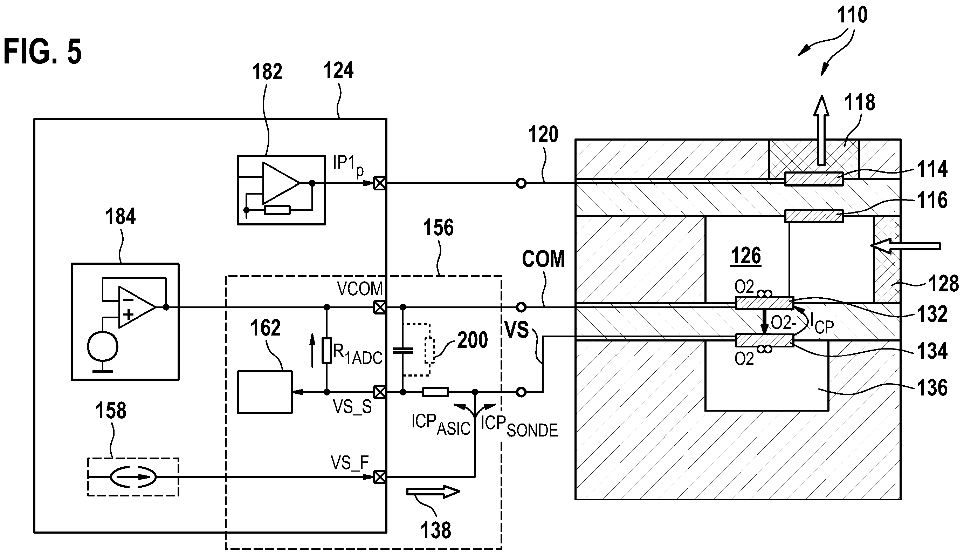

In dem Ausführungsbeispiel gemäß Figur 5 wird eine Beobachtung aus der Praxis berücksichtigt, dass hierbei oft nicht der gesamte Strom, welcher aus der einstellbaren Stromquelle 158 erzeugt wird, das Sensorelement erreicht, da ein Teil dieses Stromes einen anderen Weg zur virtuellen Masse COM findet und zum Beispiel durch den Analog-Digital-Wandler 162, welcher über einen Innenwiderstand verfügt, fließt. Darüber hinaus können auch parasitäre Widerstände von Kondensatoren, welche in Figur 5 schematisch durch den Widerstand 200 dargestellt sind, den Wert für den Referenz-Pumpstrom 138 verringern.

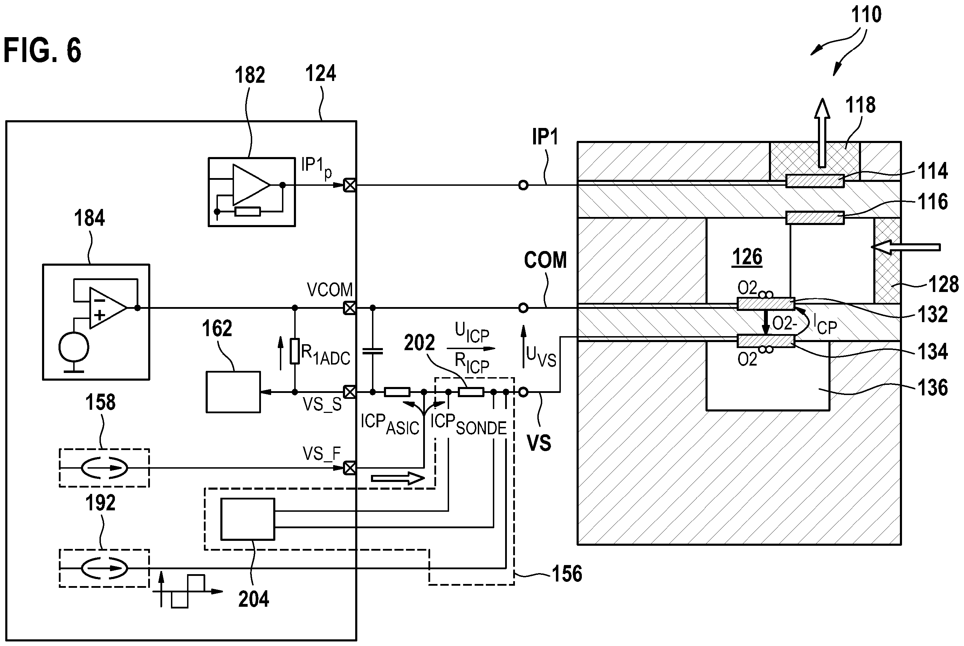

Wie in Figur 6 schematisch dargestellt, wird daher vorgeschlagen, einen weiteren zusätzlichen Messwiderstand 202 in die Vs-Leitung von dem elektronischen Steuergerät 124 zu dem Sensorelement einzubringen und über den an dem weiteren zusätzlichen Messwiderstand 202 auftretenden Spannungsabfall den Wert des Referenz-Pumpstroms 138, welcher zu der Referenz-Elektrode 134 in dem Sensorelement gelangt, zu bestimmen. Hierzu kann insbesondere ein weiterer Analog-Digital-Wandler 204 eingesetzt werden. Da durch den Spannungsabfall an dem zusätzlichen Messwiderstand 202 der Wert für die Spannung Vs beeinflusst wird, wird vorzugsweise, um die Änderung des Messwertes für die Spannung Vs zu kompensieren, der an dem zusätzlichen Messwiderstand auftretende Spannungsabfall zu dem erfassten Wert für die Spannung Vs addiert.

Ein weiteres Ausführungsbeispiel für die Erfassung des Wertes für den Referenz-Pumpstrom 138 kann sich ebenfalls aus der obigen Figur 3 ergeben. Wie dort beschrieben, kann der Referenz-Pumpstrom 138 über den Spannungsabfall über dem zusätzlichen Messwiderstand 188 bestimmt werden. Da der Innenwiderstand 164 des Analog-Digital-Wandlers 162 üblicherweise erfasst und in einem Speicher zusammen mit weiteren Kalibrationsdaten für den Analog-Digital-Wandler 162 gespeichert wird, kann somit bei Kenntnis des Innenwiderstandes des Analog-Digital-Wandlers 162 der tatsächlichen durch den Analog-Digital-Wandler 162 fließende Strom berechnet werden, da auch die Spannung Vs am Analog-Digital-Wandler 162 erfasst wird. In einer Betriebsart, in welcher der Analog-Digital-Wandler 162 nur während bestimmter Phasen eine Messung vornimmt, so dass auch nur während dieser Phasen Strom durch den Innenwiderstand 164 des Analog-Digital-Wandlers 162 fließt, kann hierbei ein anteiliger Verlust des Referenz-Pumpstroms 138 ermittelt werden, indem der durch den Analog-Digital-Wandler 138 fließende Strom anteilig auf eine gesamte Periodendauer bezogen wird.

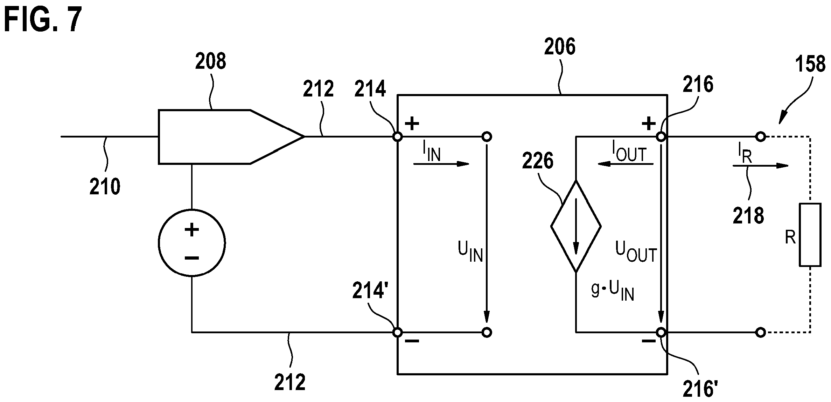

In den nachfolgenden Figuren 7 bis 9 sind bevorzugte Ausführungsbeispiele für eine Ausgestaltung der einstellbaren Stromquelle 158 dargestellt, über welche das elektronische Steuergerät 124 zur Einstellung des Wertes für den Referenz-Pumpstrom 138 verfügen kann.

In einem ersten Ausführungsbeispiel der einstellbaren Stromquelle 158 ist in Figur 7 eine spannungsgesteuerte Stromquelle 206 schematisch in Form eines Ersatzschaltbildes dargestellt. In diesem exemplarischen Beispiel erzeugt ein n-bit Digital-Analog-Wandler 208 aus einem n-bit Steuerwort 210 ein Spannungssignal 212. Das am Eingang 214, 214' der spannungsgesteuerten Stromquelle 206 anliegende Spannungs-Steuersignal 212 erzeugt am Ausgang 216, 216' der spannungsgesteuerten Stromquelle 206 somit einen Strom 218 mit einer über das Spannungs-Steuersignal 212 einstellbaren Größe.

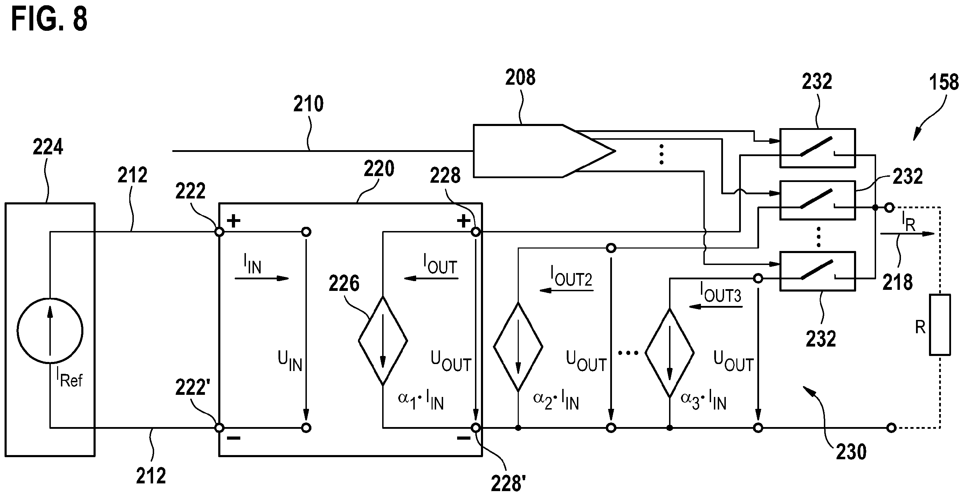

In Figur 8 ist als weiteres Ausführungsbeispiel schematisch in Form eines Ersatzschaltbildes einer stromgesteuerte Stromquelle 220 dargestellt. In diesem Ausführungsbeispiel wird ein sogenannter "Stromspiegel" eingesetzt, welcher einen Eingangsstrom aus einer Referenz-Stromquelle 224 in eine Spannung umwandelt. Diese Spannung wiederum steuert eine interne Stromquelle 226, welche den Wert des Stromes an Ausgängen 228, 228' der stromgesteuerten Stromquelle 220 festlegt. Hierbei beschreibt ein so genannter "Gain" des Stromspiegels ein Verhältnis des Wertes des Ausgangstroms zu dem Wert des jeweiligen Eingangsstroms. Da sich die Ausgangsströme durch Leitungsverbindungen 230 aufsummieren lassen, erlaubt ein Schalten des Stromspiegels mit jeweils unterschiedlichem Gain eine Einstellung eines Ausgangsstroms mit einem bestimmten Wert. Eine Festlegung des Wertes für den Ausgangsstrom 218 kann hierbei durch Schalter 232 erfolgen, deren Ansteuerung, wie oben beschrieben, auch hier durch den mittels eines n-bit Steuerwortes 210 gesteuerten n-bit Digital-Analog-Wandlers 208 erfolgen kann.

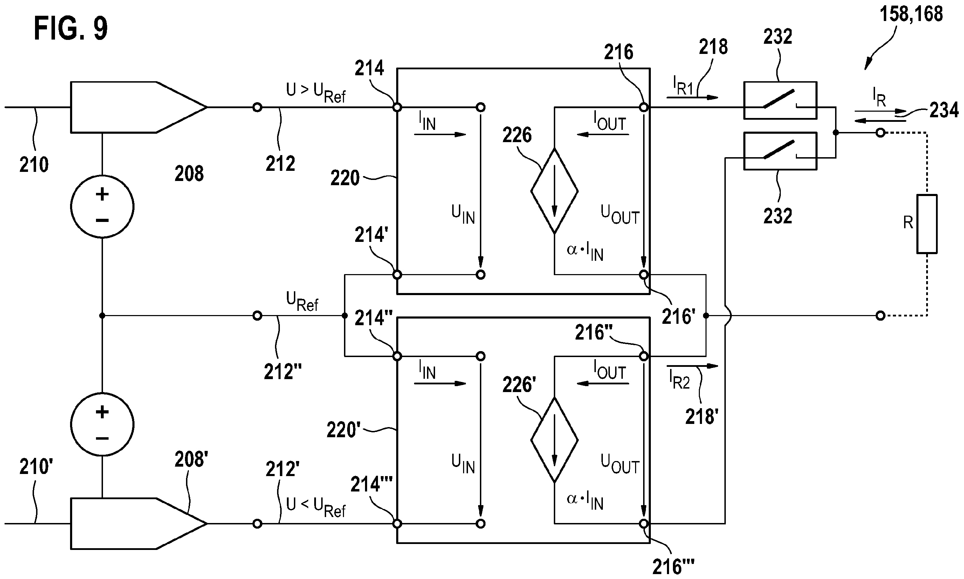

Figur 9 zeigt, dass die konfigurierbare Stromquelle 168, welche über zwei einstellbare stromgesteuerte Stromquellen 220, 220' verfügt, sich derart zusammenschalten lassen, dass sich hierbei die Richtung des Stromflusses umkehren lässt. Hierbei wandeln die beiden n-bit Digital-Analog-Wandler 208, 208' jeweils das eingehende n-bit Steuerwort 210, 210' in Spannungs-Steuersignale 212, 212', 212" an den Eingängen 214, 214' der ersten stromgesteuerten Stromquelle 220 bzw. an den Eingängen 214", 214'" der zweiten stromgesteuerten Stromquelle 220' in jeweils eine Spannung um, welche wiederum jeweils eine Stromquelle 226, 226' betreibt, wobei die zugehörige Stromquelle 226, 226' jeweils den Strom 218, 218' an den Ausgängen 216, 216', 216", 216'" bestimmt. Durch die Schalter 232 lassen sich die beiden Ströme 218, 218' derart aufaddieren, dass hierbei ein Gesamtstrom 234, welcher eine beliebige Richtung aufweisen kann, erzeugt werden kann.

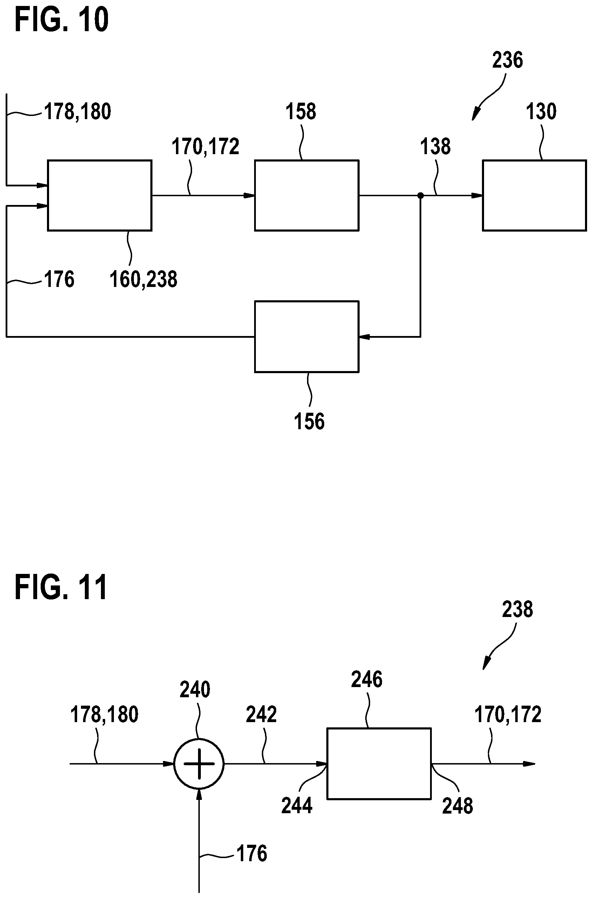

Figur 10 zeigt schematisch einen Regelkreis 236 für den Referenz-Pumpstrom 138 der Referenzzelle 130. Der Regelkreis 236 wird hierbei aus der steuerbaren Stromquelle 158, der Schaltung 156 zur Erfassung des Wertes für den Referenz-Pumpstrom 138 und dem Regler 160 gebildet. Die Stellgröße 172, welche das Eingangssignal 170 für die steuerbare Stromquelle 158 bildet, kann hierbei mit einer digitalen oder analogen Schaltung aus dem Messwert für den Referenz-Pumpstrom 138 als der ersten Eingangsgröße 176 und dem Referenzwert 180 oder der Steuergröße als der zweiten Eingangsgröße 178 gebildet werden.

Hierbei kann der Regler 160 vorzugsweise über einen Regel-Algorithmus 238 verfügen, dessen Umsetzung in Figur 11 schematisch dargestellt ist. Durch Vergleich des Wertes für den Referenz-Pumpstrom 138 mit dem Referenzwert 180, wobei der Referenz-Pumpstrom 138 als die ersten Eingangsgröße 176 und der Referenzwert 180 als die zweite Eingangsgröße 178 dient, in einem Addierer 240 wird ein Fehlersignal 242 erzeugt, welches an einem Eingang 244 einer digitalen Schaltung 246 anliegt. Die digitale Schaltung 246 ist hierbei derart eingerichtet, dass sie an einem Ausgang 248 die Stellgröße 172 bereitstellt, welche als das Eingangssignal 170 für die steuerbare Stromquelle 158 zur Verfügung steht.

## Patentansprüche

1. Verfahren zum Nachweis mindestens eines Anteils einer Messgaskomponente mit gebundenem Sauerstoff in einem Gasgemisch, insbesondere in einem Abgas einer Verbrennungskraftmaschine, in einem Messgasraum (126) durch Erfassen eines Anteils an Sauerstoff, der durch eine Reduktion der Messgaskomponente mit dem gebundenem Sauerstoff erzeugt wird, bei Anwesenheit von molekularem Sauerstoff in einer Vorrichtung (110), welche mindestens eine erste Pumpzelle (112), eine Referenzzelle (130) und eine zweite Pumpzelle (140) aufweist, umfassend die Schritte:
a) Erzeugen eines ersten Pumpstroms (120) in der ersten Pumpzelle (112) derart, dass ein Transport eines ersten Anteils von Sauerstoffionen zwischen dem Messgasraum (126) und einer Umgebung der Vorrichtung (110) stattfindet;
b) Anlegen eines Referenz-Pumpstroms (138) an die Referenzelle (130) derart, dass ein zweiter Anteil von Sauerstoffionen in einen Referenzgasraum (136) transportiert wird;
c) Zersetzen der Messgaskomponente mit dem gebundenem Sauerstoff mittels Katalyse an einer Elektrode der zweiten Pumpzelle (140), wodurch aus der Messgaskomponente weiterer molekularer Sauerstoff erzeugt wird;
d) Anlegen eines zweiten Pumpstroms (146) an die zweite Pumpzelle (140) derart, dass ein Anteil von weiteren Sauerstoffionen, welche aus dem weiteren molekularem Sauerstoff gebildet werden, in den Referenzgasraum (136) transportiert wird;
wobei
e) eine Summe von Strömen, welche aus dem Referenz-Pumpstrom (138) und dem zweiten Pumpstrom (146) gebildet wird, konstant gehalten wird und dass ein Wert des Referenz-Pumpstroms (138) derart eingestellt wird, dass die Summe der Ströme konstant gehalten wird, und aus einem Wert des zweiten Pumpstroms (146) der Anteil der Messgaskomponente mit dem gebundenem Sauerstoff in dem Gasgemisch bestimmt wird.

2. Verfahren nach Anspruch 1, **dadurch gekennzeichnet, dass** das Zersetzen der Messgaskomponente mit dem gebundenem Sauerstoff durch eine katalytische Wirkung von Elektroden (142, 144), welche an der der zweiten Pumpzelle (140) anliegen, erfolgt.

3. Verfahren nach Anspruch 1 oder 2, **dadurch gekennzeichnet, dass** der Wert für den ersten Pumpstrom (120) derart eingestellt wird, dass sich ein festgelegtes Verhältnis zwischen dem ersten Anteil der Sauerstoffionen und dem zweiten Anteil der Sauerstoffionen ergibt.

4. Verfahren nach einem der Ansprüche 1 - 3, **dadurch gekennzeichnet, dass** der Wert für den Referenz-Pumpstrom (138) derart eingestellt wird, dass sich ein festgelegter Anteil der Sauerstoffionen in dem Referenzgasraum (136) ausbildet.

5. Elektronisches Steuergerät (124), welches dazu eingerichtet ist, ein Verfahren nach einem der Ansprüche 1 - 4 durchzuführen und dazu folgende strukturelle Merkmale aufweist:
- Eine Einrichtung zur Erzeugung eines ersten Pumpstroms, welcher einen Transport eines ersten Anteils von Sauerstoffionen zwischen dem Messgasraum (126) und einer Umgebung der Vorrichtung (110) bewirkt;
- Eine Einrichtung zum Anlegen eines Referenz-Pumpstroms (138) an die Referenzelle (130) derart, dass ein zweiter Anteil von Sauerstoffionen in einen Referenzgasraum (136) transportiert wird;
- Eine Einrichtung zum Anlegen eines zweiten Pumpstroms (146) an die zweite Pumpzelle (140) derart, dass ein Anteil von weiteren Sauerstoffionen, welche aus dem weiteren molekularem Sauerstoff gebildet werden, in den Referenzgasraum (136) transportiert wird;
- Eine Einrichtung zur Bildung einer Summe von Strömen aus dem Referenz-Pumpstrom (138) und dem zweiten Pumpstrom (146) und zur Konstanthaltung dieser Summe;
- Eine Einrichtung zur Bestimmung des Anteil der Messgaskomponente mit dem gebundenem Sauerstoff in dem Gasgemisch aus einem Wert des zweiten Pumpstroms.

6. Elektronisches Steuergerät (124) nach Anspruch 5, wobei ein Messwiderstand zur Erfassung des Wertes für den Referenz-Pumpstrom (138) vorgesehen ist, wobei der Messwiderstand ausgewählt ist aus
- einem Widerstand (188) für die Bestimmung des Referenz-Pumpstroms (138),
- einem Widerstand (194) für die Bestimmung des zweiten Pumpstroms (146),
- einem Widerstand (202), welcher in eine Verbindung von dem elektronischen Steuergerät (124) zu einer Referenzelektrode (134) der Referenzzelle (130) eingebracht ist, oder
- einem Innenwiderstand (164) eines in dem elektronische Steuergerät (124) vorhandenen Analog-Digital-Wandlers (162).

7. Elektronisches Steuergerät (124) nach einem der Ansprüche 5 oder 6, wobei zur Einstellung des Wertes für den Referenz-Pumpstrom (138) mindestens eine einstellbare Stromquelle (158) vorhanden ist.

8. Elektronisches Steuergerät (124) Anspruch 7, wobei die einstellbare Stromquelle (158) spannungsgesteuert oder stromgesteuert ist.

9. Elektronisches Steuergerät (124) nach einem der Ansprüche 7 oder 8, wobei zwei gesonderte, stromgesteuerte Stromquellen (220, 220') vorhanden und derart zusammengeschaltet sind, dass die beiden stromgesteuerte Stromquellen (220, 220') zueinander eine entgegengesetzte Potentialreferenz aufweisen.

10. Elektronisches Steuergerät (124) nach einem der Ansprüche 7 - 9, wobei zur Regelung des Wertes für den Referenz-Pumpstrom (138) mindestens eine Regeleinheit (160) vorgesehen ist, wobei die Regeleinheit (160) zur Aufnahme von mindestens zwei Eingangsgrößen (176, 178) und zur Abgabe mindestens einer Stellgröße (172) eingerichtet ist, wobei die Eingangsgrößen (176, 178) die Werte für den Referenz-Pumpstrom (138) und einen Referenzwert (180) für die Regeleinheit (160) umfassen, und wobei die Stellgröße (172) als Eingangssignal (170) an die einstellbare Stromquelle (158) abgebbar ist.

11. Vorrichtung (110) zum Nachweis mindestens eines Anteils einer Messgaskomponente mit gebundenem Sauerstoff in einem Gasgemisch, insbesondere in einem Abgas einer Verbrennungskraftmaschine, in einem Messgasraum (126) durch Erfassen eines Anteils an Sauerstoff, der durch eine Reduktion der Messgaskomponente mit dem gebundenem Sauerstoff erzeugt wird, bei Anwesenheit von molekularem Sauerstoff in der Vorrichtung (110), umfassend mindestens eine erste Pumpzelle (112), eine Referenzzelle (130), eine zweite Pumpzelle (140) und ein elektronisches Steuergerät (124) nach einem der Ansprüche 5 - 10.

12. Computerprogramm, welches dazu eingerichtet ist, um die Schritte des Verfahrens nach einem der Ansprüche 1 - 4 in einem elektrischen Steuergerät nach einem der Ansprüche 5 - 11 durchzuführen.

13. Elektronisches Speichermedium, auf welchem ein Computerprogramm nach Anspruch 12 gespeichert ist.

## Claims

1. Method for detecting at least one proportion of a measurement gas component having bound oxygen in a gas mixture, in particular in exhaust gas of an internal combustion engine, in a measuring gas space (126) by sensing a proportion of oxygen which is generated by reducing the measuring gas component having the bound oxygen, when molecular oxygen is present in a device (110) which has at least one first pump cell (112), one reference cell (130) and one second pump cell (140), comprising the steps:
a) generating a first pump current (120) in the first pump cell (112) in such a way that a first proportion of oxygen ions is transported between the measuring gas space (126) and the surroundings of the device (110);
b) applying a reference pump current (138) to the reference cell (130) in such a way that a second portion of oxygen ions is transported into a reference gas space (136);
c) decomposing the measuring gas component having the bound oxygen by means of catalysis at an electrode of the second pump cell (140), as a result of which further molecular oxygen is generated from the measuring gas component;
d) applying a second pump current (146) to the second pump cell (140) in such a way that a proportion of further oxygen ions which are formed from the further molecular oxygen is transported into the reference gas space (136);
wherein
e) a sum of currents which is formed from the reference pump current (138) and the second pump current (146) is kept constant, and in that a value of the reference pump current (138) is set in such a way that the sum of the currents is kept constant, and the proportion of the measuring gas component having the bound oxygen in the gas mixture is determined from a value of the second pump current (146).

2. Method according to Claim 1, **characterized in that** the decomposition of the measuring gas component having the bound oxygen occurs as a result of a catalytic effect of electrodes (142, 144) which rest against the second pump cell (140).

3. Method according to Claim 1 or 2, **characterized in that** the value of the first pump current (120) is set in such a way that a defined ratio is produced between the first proportion of oxygen ions and the second proportion of oxygen ions.

4. Method according to one of Claims 1-3, **characterized in that** the value of the reference pump current (138) is set in such a way that a defined proportion of oxygen ions is formed in the reference gas space (136).

5. Electronic control unit (124) which is designed to carry out a method according to one of Claims 1-4 and for this purpose has the following structural features:
- a device for generating a first pump current which brings about transportation of a first proportion of oxygen ions between the measuring gas space (126) and the surroundings of the device (110);
- a device for applying a reference pump current (138) to the reference cell (130) in such a way that a second proportion of oxygen ions is transported into a reference gas space (136);
- a device for applying a second pump current (146) to the second pump cell (140) in such a way that a proportion of further oxygen ions which are formed from the further molecular oxygen is transported into the reference gas space (136);
- a device for forming a sum of currents from the reference pump current (138) and the second pump current (146) and for keeping this sum constant;
- a device for determining the proportion of measuring gas component having the bound oxygen in the gas mixture from a value of the second pump current.

6. Electronic control unit (124) according to Claim 5, wherein a measuring resistor for sensing the value of the reference pump current (138) is provided, wherein the measuring current is selected from
- a resistor (188) for determining the reference pump current (138),
- a resistor (194) for determining the second pump current (146),
- a resistor (202) which is introduced into a connection of the electronic control unit (124) to a reference electrode (134) of the reference cell (130), or
- an internal resistor (164) of an analog-to-digital converter (162) which is present in the electronic control unit (124).

7. Electronic control unit (124) according to one of Claims 5 and 6, wherein at least one adjustable power source (158) is provided for adjusting the value of the reference pump current (138).

8. Electronic control unit (124) according to Claim 7, wherein the adjustable power source (158) is voltage-controlled or current-controlled.

9. Electronic control unit (124) according to one of Claims 7 and 8, wherein two separate current-controlled power sources (220, 220') are provided and are connected together in such a way that the two current-controlled power sources (220, 220') have an opposite potential reference with respect to one another.

10. Electronic control unit (124) according to one of Claims 7-9, wherein at least one adjustment unit (160) is provided for adjusting the value of the reference pump current (138), wherein the adjustment unit (160) is configured to receive at least two input variables (176, 178) and to output at least one manipulated variable (172), wherein the input variables (176, 178) comprise the values of the reference pump current (138) and a reference value (180) for the adjustment unit (160), and wherein the manipulated variable (172) can be output as an input signal (170) to the adjustable power source (158).

11. Device (110) for detecting at least one proportion of a measuring gas component having bound oxygen in a gas mixture, in particular in an exhaust gas of an internal combustion engine, in a measuring gas space (126) by detecting a proportion of oxygen which is generated by reducing the measuring gas component having the bound oxygen, when molecular oxygen is present in the device (110), comprising at least one first pump cell (112), one reference cell (130), one second pump cell (140) and one electronic control unit (124) according to one of Claims 5-10.

12. Computer program which is configured to carry out the steps of the method according to one of Claims 1-4 in an electric control unit according to one of Claims 5-11.

13. Electronic storage medium in which a computer program according to Claim 12 is stored.

## Revendications

1. Procédé de détection d'au moins une proportion d'un composant de gaz de mesure comportant de l'oxygène lié dans un mélange gazeux, en particulier dans un gaz d'échappement d'un moteur à combustion interne, dans un espace de gaz de mesure (126) par détection d'une proportion d'oxygène, qui est générée par réduction du composant de gaz de mesure comportant de l'oxygène lié, en présence d'oxygène moléculaire dans un dispositif (110) qui comporte au moins une première cellule de pompe (112), une cellule de référence (130) et une deuxième cellule de pompe (140), le procédé comprenant les étapes suivantes :
a) générer un premier courant de pompe (120) dans la première cellule de pompe (112) de manière à effectuer un transport d'une première proportion d'ions oxygène entre l'espace de gaz de mesure (126) et l'environnement du dispositif (110) ;
b) appliquer un courant de pompe de référence (138) à la cellule de référence (130) de manière à transporter une deuxième proportion d'ions oxygène dans un espace de gaz de référence (136) ;
c) décomposer le composant de gaz de mesure comportant de l'oxygène lié par catalyse au niveau d'une électrode de la deuxième cellule de pompe (140), de façon à générer de l'oxygène moléculaire supplémentaire à partir du composant de gaz de mesure ;
d) appliquer un deuxième courant de pompe (146) à la deuxième cellule de pompe (140) de manière à transporter une proportion d'ions oxygène supplémentaires, qui sont formés à partir de l'oxygène moléculaire supplémentaire, dans l'espace de gaz de référence (136) ;
e) une somme de courants, qui est formée à partir du courant de pompe de référence (138) et du deuxième courant de pompe (146), étant maintenue constante et en ce qu'une valeur du courant de pompe de référence (138) est réglée de manière à ce que la somme des courants soit maintenue constante, et la proportion du composant de gaz de mesure comportant de l'oxygène lié dans le mélange gazeux étant déterminée à partir d'une valeur du deuxième courant de pompe (146).

2. Procédé selon la revendication 1, **caractérisé en ce que** la décomposition du composant de gaz de mesure comportant de l'oxygène lié est effectuée par effet catalytique d'électrodes (142, 144) qui sont en appui sur la deuxième cellule de pompe (140).

3. Procédé selon la revendication 1 ou 2, **caractérisé en ce que** la valeur du premier courant de pompe (120) est réglée de manière à obtenir un rapport défini entre la première proportion d'ions oxygène et la deuxième proportion d'ions oxygène.

4. Procédé selon l'une des revendications 1 à 3, **caractérisé en ce que** la valeur du courant de pompe de référence (138) est réglée de manière à former une proportion définie d'ions oxygène dans l'espace de gaz de référence (136).

5. Unité de commande électronique (124) qui est conçue pour mettre en œuvre un procédé selon l'une des revendications 1 à 4 et qui présente les éléments caractéristiques structurels suivants :
- un moyen destiné à générer un premier courant de pompe, qui provoque un transport d'une première proportion d'ions oxygène entre l'espace de gaz de mesure (126) et un environnement du dispositif (110) ;
- un moyen destiné à appliquer un courant de pompe de référence (138) à la cellule de référence (130) de manière à transporter une deuxième proportion d'ions oxygène dans un espace de gaz de référence (136) ;
- un moyen destiné à appliquer un deuxième courant de pompe (146) à la deuxième cellule de pompe (140) de manière à transporter une proportion d'ions oxygène supplémentaires, qui sont formés à partir de l'oxygène moléculaire supplémentaire, dans l'espace de gaz de référence (136) ;
- un moyen destiné à former une somme de courants à partir du courant de pompe de référence (138) et du deuxième courant de pompe (146) et à maintenir cette somme constante ;
- un moyen destiné à déterminer la proportion du composant de gaz de mesure comportant de l'oxygène lié dans le mélange gazeux à partir d'une valeur du deuxième courant de pompe.

6. Unité de commande électronique (124) selon la revendication 5, une résistance de mesure étant prévue pour détecter la valeur du courant de pompe de référence (138), la résistance de mesure étant choisie parmi
- une résistance (188) destinée à déterminer le courant de pompe de référence (138),
- une résistance (194) destinée à déterminer le deuxième courant de pompe (146),
- une résistance (202) qui est introduite dans une liaison de l'unité de commande électronique (124) à une électrode de référence (134) de la cellule de référence (130), ou
- une résistance interne (164) d'un convertisseur analogique-numérique (162) présent dans l'unité de commande électronique (124).

7. Unité de commande électronique (124) selon l'une des revendications 5 ou 6, au moins une source de courant réglable (158) étant présente pour régler la valeur du courant de pompe de référence (138).

8. Unité de commande électronique (124) selon la revendication 7, la source de courant réglable (158) étant commandée en tension ou commandée en courant.

9. Unité de commande électronique (124) selon l'une des revendications 7 ou 8, deux sources de courant distinctes (220, 220') commandées en courant étant présentes et interconnectées de telle sorte que les deux sources de courant (220, 220') commandées en courant aient des références de potentiel opposées l'une à l'autre.

10. Unité de commande électronique (124) selon l'une des revendications 7 à 9, au moins un module de régulation (160) étant prévu pour réguler la valeur du courant de pompe de référence (138), le module de régulation (160) étant adapté pour recevoir au moins deux grandeurs d'entrée (176, 178) et pour délivrer au moins une grandeur de réglage (172), les grandeurs d'entrée (176, 178) comprenant les valeurs du courant de pompe de référence (138) et une valeur de référence (180) du module de régulation (160), et la grandeur de réglage (172) pouvant être délivrée en tant que signal d'entrée (170) à la source de courant réglable (158).

11. Dispositif (110) de détection d'au moins une proportion d'un composant de gaz de mesure comportant de l'oxygène lié dans un mélange gazeux, en particulier dans un gaz d'échappement d'un moteur à combustion interne, dans un espace de gaz de mesure (126) par détection d'une proportion d'oxygène qui est générée par réduction du composant de gaz de mesure comportant de l'oxygène lié, en présence d'oxygène moléculaire dans le dispositif (110), ledit dispositif comprenant au moins une première cellule de pompe (112), une cellule de référence (130), une deuxième cellule de pompe (140) et une unité de commande électronique (124) selon l'une des revendications 5 à 10.

12. Logiciel qui est conçu pour exécuter les étapes du procédé selon l'une des revendications 1 à 4 dans une unité de commande électrique selon l'une des revendications 5 à 11.

13. Support de stockage électronique sur lequel est stocké un logiciel selon la revendication 12.
